# EUROPÄISCHE PATENTSCHRIFT

(11) **EP 2 366 654 B1**
(45) Veröffentlichungstag und Bekanntmachung des Hinweises auf die Patenterteilung: **31.10.2012**
(21) Anmeldenummer: 11154139.7
(22) Anmeldetag: 11.02.2011
(51) Int. Cl.: B66C 19/00, B62D 7/20

(54) **Lenkung eines Portalstaplers**
Steering a straddle carrier
Direction d'une empileuse de portails

(30) Priorität: 18.03.2010 DE 102010011934
(43) Veröffentlichungstag der Anmeldung: 21.09.2011
(73) Patentinhaber: Noell Mobile Systems GmbH, 97080 Würzburg (DE)
(72) Erfinder: Müller, Conrad, 97299, Zell am Main (DE); Weckert, Richard, 97359, Schwarzbach am Main (DE)
(74) Vertreter: Rau, Schneck & Hübner

(56) Entgegenhaltungen:
- DE-A1- 19 911 121
- DE-U1- 20 311 886
- US-A1- 2003 168 826

## Beschreibung

Die Erfindung betrifft die Lenkung eines Portalstaplers entsprechend den Merkmalen des ersten Patentanspruches.

Die Erfindung ist überall dort einsetzbar, wo Lenkungen an Portalstaplern vorhanden sind, die Sollbruch- oder Sollknickstellen aufweisen, die bei übergroßen Beanspruchungen verhindern sollen, daß andere Bauteile beschädigt werden.

Ein Portalstapler der genannten Art ist beispielsweise in DE 203 11 886 U1 beschrieben. Dieser Portalstapler, ein sogenannter Straddle Carrier, weist eine U-förmige Bauweise auf. In der Regel sind vier Stützen an einem oberen Rahmen angeordnet, wobei sich an den Stützen die unteren Rahmenteile mit den Rädern befinden. Am oberen Rahmenteil sind in der Regel die Fahrerkabine, der Antrieb und das Hubgerüst angeordnet, mit dem Container erfaßt, angehoben und transportiert werden. Da Container in der Regel auf sehr engem Raum gestapelt werden müssen, muß der untere Teil des Portalhubstaplers möglichst schmal ausgeführt sein. Die Räder sind an Radaufhängungen angeordnet, die mittels elektrischer oder hydraulischer Aktuatoren, beispielsweise eines Hydraulikzylinders, betätigt werden, wobei Lenkstangen zur Kraftübertragung dienen.

Die Lenkstangen bestehen in der Regel aus einem Rohr mit beidseitig angedrehten Gewinden, auf denen die Lenkstangenköpfe aufgeschraubt werden. Um dem Gewinde genügend Querschnitt zu bieten, muß das Rohr Mindestdurchmesser und -wandstärke haben. Dies führt zwangsläufig zu einem großen Querschnitt mit entsprechend hoher Knickkraft. Dadurch werden im Falle von übergroßen Beanspruchungen (zum Beispiel beim Anfahren an Hindernisse) andere Bauteile beschädigt und in der Folge unbrauchbar, deren Ersatz beziehungsweise Reparatur kostspielig sind. Um dies zu vermeiden, wird häufig der Querschnitt der Lenkstange in der Mitte durch Abdrehen geschwächt, dadurch ergibt sich eine Sollknickstelle. Übergroße Beanspruchungen an den anderen Bauteilen werden dadurch vermieden.

In DE 10 2006 019 341 B3 ist ein Axialzapfen, vorzugsweise zur Verwendung als Spurstangenbauteil mit mindestens einem Teilbereich beschrieben, welcher als definierte Knickstelle bei vorbestimmter Grenzbeanspruchung des Axialzapfens ausgestaltet ist. Der Teilbereich weist mehrere axiale, eng nebeneinander angeordnete Nuten auf, durch die definierte Knickstellen entstehen.

Der zusätzliche Arbeitsschritt des nachträglichen Abdrehens verursacht zusätzliche Kosten und ist somit nachteilig.

Andererseits können Lenkstangen auch aus einem Rohr oder einer Stange mit beidseitig angeschweißten Gewindestück bestehen. Diese Ausführung erlaubt einen kleinen Querschnitt des Rohres, welcher bei übergroßer Beanspruchung ausknickt und somit Schäden an den anderen Bauteilen der Lenkung vermeidet. Nachteilig sind die hohen Fertigungskosten, bedingt durch die drei verschiedenen Bauteile, welche gefügt werden müssen.

EP 0 943 525 B1 beschreibt die Längssäulenanordnung für ein Kraftfahrzeug, bei dem Stellglieder Knickstellen aufweisen, über denen ein Schutzbügel angeordnet ist und die plastisch verformbar gestaltet sind. Die Längssäulenanordnung soll dazu dienen, mit einfachen Mitteln Aufprallenergie bei einem Fahrzeugaufprall aufzunehmen. Nach dem Aufprall ist es erforderlich, die ausgeknickte Sollknickstelle, die sich im längserstreckenden Stellglied befindet, auszutauschen, was mit erheblichem Aufwand verbunden ist.

DE 10 2008 000 936 A1 beschreibt eine Radaufhängung für ein Fahrzeug mit mindestens zwei Radaufhängungsbauteilen und einem energieabsorbierenden Radaufhängungsbauteil, welches in einem Ende in einem Langloch geführt wird und eine Achse bei Krafteinwirkung auf das Verbindungselement entlang dem Langloch ausweichen kann, wobei es bei Bewegung der Achse zu einer plastischen Verformung des Verbindungselementes kommt. Diese Art der Radaufhängung ist allerdings für die Konstruktion eines Portalstaplers ungeeignet.

DE 42 44 062 C1 beschreibt die Überlastungssicherung für die Lenkung von spurgeführten Radfahrzeugen, bei denen eine Tastrolle an einer Leitwand entlanggeführt wird und an einem Halterungsteil befestigt ist, durch das die Lenkung des Rades geführt wird. Zwischen Tastrolle und Halterungsteil ist ein Deformationsteil angeordnet, welches sich in einer ersten Überlastungsphase elastisch und in einer zweiten, verstärkten Überlastungsphase plastisch verformt. Die Lösung ist für spurgeführte Radfahrzeuge geeignet, nicht aber für Portalstapler, da diese keine Tastrolle aufweisen.

Ausgehend von diesem Stand der Technik ist es Aufgabe der Erfindung, eine Lenkung für einen Portalstapler zu entwickeln, die bei übergroßer Beanspruchung Schäden vermeidet, wobei der Aufwand an Material und Arbeitszeit gering und der Bruch von Teilen vermieden werden soll.

Diese Aufgabe wird durch eine Lenkung nach den Merkmalen des ersten Patentanspruches gelöst.

Unteransprüche geben vorteilhafte Ausgestaltungen der Erfindung wieder.

Die erfindungsgemäße Lösung sieht die Lenkung eines Portalstaplers vor, welche aus der Lenkstange besteht, die aus einem Rohr mit Stangenköpfen zur Aufnahme des Lagers ausgeführt ist und einerseits am Stahlbau der Radaufhängung des zu lenkenden Rades und andererseits am mechanischen Stellglied der Lenkung eingreifen. Einer der Stangenköpfe weist eine Kröpfung, daß heißt einen verminderten Querschnitt des Stangenkopfes, auf.

Erfindungswesentlich ist, daß die Querschnittsfläche der Kröpfung am Stangenkopf bei einem vorgegebenen Werkstoff so zu bemessen ist, daß bei einer maximal vorgegebenen Beanspruchung kein Bruch, sondern eine plastische Verformung des Werkstoffs eintritt.

Das setzt bei einheitlichem Werkstoff des Stangenkopfes voraus, daß die Querschnittsfläche, die für die plastische Verformung vorgesehen ist, geringer ist, als alle weiteren Querschnittsflächen des betreffenden Stangenkopfes. Weiterhin ist ein geeigneter Werkstoff für den Stangenkopf auszuwählen. In der Regel kommt hierfür ein zäher Werkstoff, wie zum Beispiel Baustahl zur Anwendung.

Die Lage der Anlenkpunkte der Lenkstangen an den Radaufhängungen ergeben sich aus der gewünschten Lenkgeometrie und können nicht beeinflußt werden, Um die beteiligten Bauteile freigängig zu halten, ergibt sich üblicherweise zumindest für einen der beiden Köpfe der Lenkstange eine Kröpfung, die nach dem Stand der Technik möglichst klein gehalten wurde, um kein Versagen dieses Bauteils durch mechanische Spannungen jenseits der Streckgrenze des Werkstoffes und Verformungen jenseits der Bruchdehnung zu riskieren. Die mechanischen Spannungen im und Verformungen am Stangenkopf ergeben sich einerseits aus der Axialkraft der Lenkstange und aus einem durch die Axialkraft und den Fehlhebel bedingten örtlichen Biegemoment im Stangenkopf. Durch das Ausmaß des Fehlhebels bedingt, wachsen die Biegespannungen schneller als die Druckspannungen und führen in der Folge übergroßer Axialkräfte zum Werkstofffließen beziehungsweise zu plastischen Verformungen.

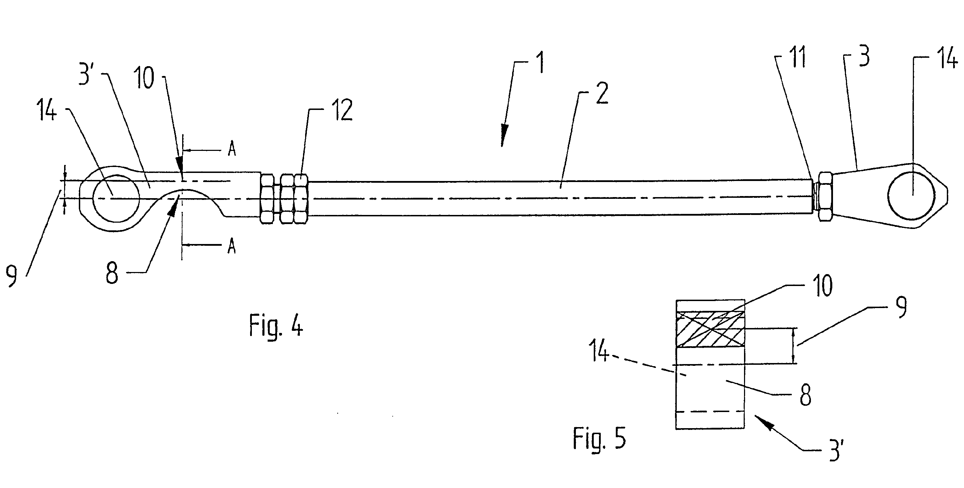

Die Erfindung besteht darin, Geometrie und Werkstoff so zu wählen (Fig.4), daß der Werkstoff bei übergroßen Beanspruchungen fließt und sich das Bauteil plastisch nach gewünschter Art verformt, jedoch nicht bricht.

Dies wird durch dadurch erreicht, daß der sich aus der Kröpfung ergebende Fehlhebel nicht möglichst klein, sondern so gewählt wird, daß sich das Bauteil bei übergroßer Beanspruchung in der oben beschriebenen gewünschten Art verhält. Der Fehlhebel ist als senkrechter Abstand eines Flächenschwerpunkts einer Querschnittsfläche des Stangenkopfes im Bereich der Kröpfung zu einer Längsachse des Lenkstangenrohres festgelegt. Die Größe des Fehlhebels hängt von der Höhe der übergroßen Beanspruchung ab und muß individuell rechnerisch gewählt und im Versuch nachgewiesen werden. Als sinnvoll wird angesehen, den Querschnitt der Sollknickstelle so zu wählen, dass die übergroße Beanspruchung im Querschnitt der Sollknickstelle unter der Annahme des Hookschen Gesetzes rechnerisch eine Spannung hervorruft, die in der gestreckten Außenfaser dem 1- bis 2-fachen und in der gestauchten Außenfaser dem 1,5- bis 2,5-fachen der Zugfestigkeit des Werkstoffes entspricht. Die Sollknickstelle des Stangenkopfes ist im Bereich der Kröpfung dort angeordnet, wo der senkrecht zur Längsachse orientierte Querschnitt eine minimale Querschnittsfläche aufweist.

Vorteilhaft ist es, die Querschnittsfläche des Stangenkopfes mit Kröpfung rechteckig auszubilden. Für diese Querschnittsform wird ein Verhältnis von Querschnittshöhe zu Querschnittsbreite zu Fehlhebel von 2:1:1 1 als sinnvoll angesehen. Für dieses Verhältnis der Querschnittsmaße wird vorgeschlagen, dass der doppelte Wert des Quotienten aus der Knickkraft und dem Quadrat der Querschnittsbreite zahlenmäßig zwischen der Streckgrenze und der Zugfestigkeit des Werkstoffes liegt.

Darüber hinaus ist es vorteilhaft, daß der Stangenkopf mittels Gewinde montiert wird, somit auswechselbar und in seiner Länge gegenüber dem Stangenrohr verstellbar angeordnet ist.

Die Erfindung hat den Vorteil, daß bei übergroßer Beanspruchung durch die Vermeidung von Versagen eines Bauteils ein Verlust der Führung der gelenkten Räder vermieden wird, was die Gefahr von Personen- und hohen Sachschäden minimiert. Außerdem ist der Aufwand für den Ersatz des beschädigten Bauteils verhältnismäßig gering.

Im Folgenden soll die Erfindung an fünf Figuren und einem Ausführungsbeispiel näher erläutert werden. Die Figuren zeigen:
- Figur 1:: Lenkung für einen Portalstapler in Seitenansicht
- Figur 2:: Lenkung für einen Portalstapler in Draufsicht
- Figur 3:: Darstellung einer Lenkstange mit Stangenköpfen nach dem Stand der Technik
- Figur 4:: Darstellung einer Lenkstange mit einem erfindungsgemäßen Stangenkopf mit Kröpfung
- Figur 5:: Schnitt A-A von Figur 4

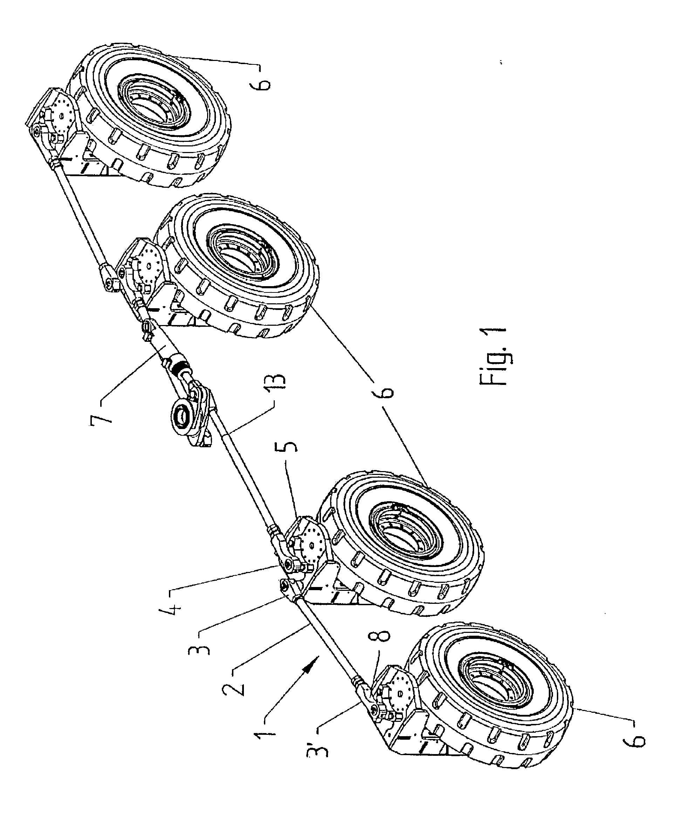

Die Figur 1 zeigt die Lenkung an einem Portalstapler in Seitenansicht, bei dem vier zu lenkende Räder 6 an Radaufhängungen 5 angeordnet sind. Diese Radaufhängungen 5 sind durch Lenkstangen 1 miteinander verbunden und werden über ein mechanisches Stellglied 7, welches einen hydraulischen Aktuator darstellt, gelenkt. Jede Lenkstange 1 besteht aus dem Lenkstangenrohr 2, an dem sich beidseitig Stangenköpfe 3, 3' befinden, wobei ein Stangenkopf 3 keine Kröpfung aufweist und der andere Stangenkopf 3' mit einer Kröpfung 8 versehen ist. Zwischen den Stangenköpfen 3,3' und dem Stahlbau der Radaufhängung 5 der zu lenkenden Räder 6 ist das Lager 4 angeordnet. Das Lenkstangenrohr 2 weist eine Sollbruchstelle 13 auf, die dazu dient, bei übergroßer Beanspruchung (zum Beispiel beim Anfahren an Hindernisse) auszuknicken, damit andere Bauteile nicht beschädigt werden und die gelenkten Räder noch geführt werden.

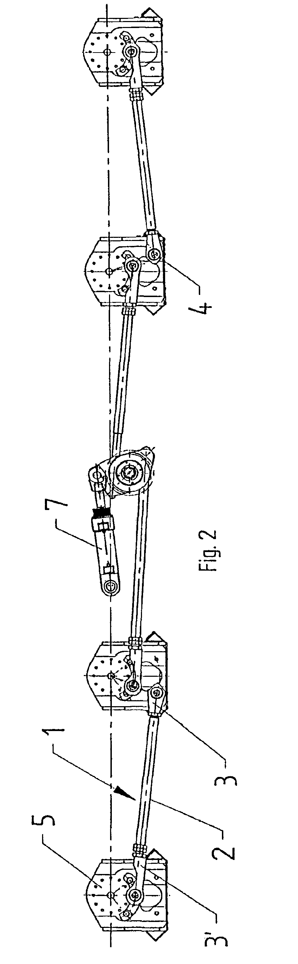

Die Figur 2 zeigt die Lenkung eines Portalstaplers in Draufsicht, bei der vier Radaufhängungen 5 durch Lenkstangen 1, bestehend aus Lenkstangenrohr 2 und Stangenköpfen 3, 3', die miteinander verbunden sind und über den hydraulischen Aktuator 7 gelenkt werden.

Der sich aus der Kröpfung 8 ergebende Fehlhebel 9 ist im vorliegenden Fall so gewählt, daß bei übergroßer Beanspruchung auf die Lenkstange 1 das örtliche Biegemoment auf den Stangenkopf 3' mit Kröpfung 8 dazu führt, daß bei übergroßen Axialkräften im Stangenkopf 3' ein Biegemoment erzeugt wird, welches ein Werkstoff-Fließen bzw. eine plastische Verformung auslöst. Dieser auf diese Weise verformte Stangenkopf 3' ist optisch als verformt erkennbar und kann ausgewechselt werden.

Jeder Stangenkopf 3, 3' weist ein Lager 4 auf.

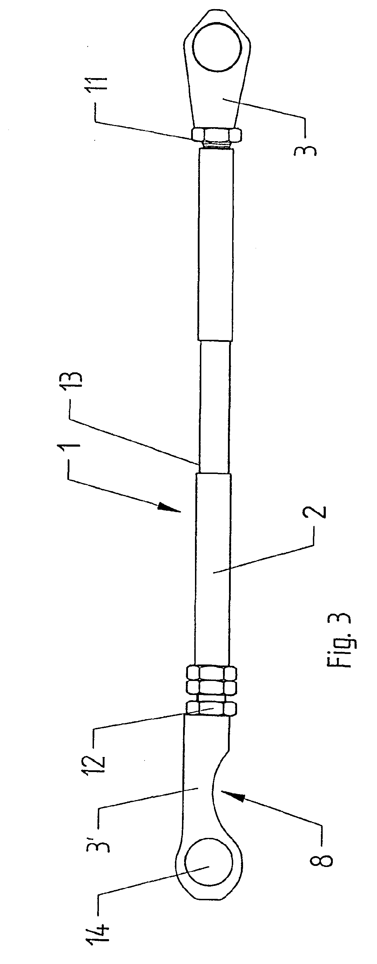

Die Figur 3 zeigt die Lenkstange 1, an deren Enden Stangenköpfe 3, 3'nach dem Stand der Technik angeschraubt sind. Jeder Stangenkopf 3, 3' weist eine Öffnung 14 für das Lager 4 auf. Die Verbindung der Stangenköpfe mit dem Stangenrohr 2 erfolgt über Gewinde 11 und Kontermuttern 12, so dass die Länge der Lenkstange 1 exakt eingestellt werden kann. Die Kröpfung 8 am Stangenkopf 3' dient dazu, die beteiligten Bauteile freigängig zu halten und wird möglichst klein gehalten, um ein Versagen dieses Bauteils durch mechanische Spannung jenseits der Streckgrenze des Werkstoffes und Verformung jenseits der Bruchdehnung zu vermeiden. Im Lenkstangenrohr 2 kann die Sollbruchstelle 13 angeordnet sein.

Die Figur 4 zeigt die Darstellung einer Lenkstange 1 mit dem erfindungsgemäßen Stangenkopf 3', dessen Kröpfung 8 in Abstimmung mit dem Werkstoff des Stangenkopfes 3' eine Querschnittsfläche 10 entstehen läßt, die so bemessen ist, daß sich der Stangenkopf 3' an dieser Stelle bei übergroßer Beanspruchung in diesem Bereich plastisch verformt, aber kein Bruch entsteht. Die Figur 5 zeigt einen Schnitt A-A durch den Stangenkopf 3' an der Querschnittsfläche 10. Das Lenkstangenrohr 2 muß keine Sollbruchstelle 13 aufweisen. Das hat den Vorteil, daß im Falle einer Reparatur lediglich der Stangenkopf 3' ausgewechselt werden muß, zusätzliche Schritte wie das Abdrehen des Rohrquerschnittes des Lenkstangenrohres 2 sind nicht erforderlich und die Lenkstange 1 kann aus weniger Teilen bestehen.

## Patentansprüche

1. Lenkung eines Portalstaplers, bestehend aus der Lenkstange (1), aus einem Rohr (2) mit Stangenköpfen (3, 3') zur Aufnahme des Lagers (4), welches einerseits am Stahlbau der Radaufhängung (5) des zu lenkenden Rades (6) und andererseits am mechanischen Stellglied (7) der Lenkung eingreift und einer Kröpfung (8) an mindestens einem der Stangenköpfe (3, 3`), **gekennzeichnet durch** eine Kröpfung (8) am Stangenkopf (3`), deren Querschnittsfläche (10) bei einem vorgegebenen Werkstoff so bemessen ist, daß bei einer maximal vorgegebenen Beanspruchung eine plastische Verformung des Stangenkopfes ohne Bruch eintritt, wobei der sich aus der Kröpfung (8) ergebende Fehlhebel (9) des Stangenkopfes (3') gegenüber dem Stangenrohr (2) so gewählt wird, daß bei übergroßen Axialkräften in der Lenkstange die plastische Verformung am Stangenkopf (3`) eintritt.

2. Lenkung eines Portalstaplers nach Anspruch 1, **dadurch gekennzeichnet, daß** die Querschnittsfläche (10) der Sollknickstelle so gewählt wird, daß eine übergroße Beanspruchung im Querschnitt der Sollknickstelle unter der Annahme des Hookschen Gesetzes rechnerisch eine Spannung hervorruft, die in der gestreckten Außenfaser dem 1- bis 2-fachen und in der gestauchten Außenfaser dem 1,5- bis 2,5-fachen der Zugfestigkeit des Werkstoffes des Stangenkopfes (3`) entspricht.

3. Lenkung eines Portalstaplers nach Anspruch 2, **dadurch gekennzeichnet, daß** die Querschnittsfläche (10) rechteckig ausgebildet ist.

4. Lenkung eines Portalstaplers nach Anspruch 3, **gekennzeichnet dadurch, daß** das Verhältnis von Querschnittshöhe zu Querschnittsbreite zu Fehlhebel etwa bei 2:1:1 liegt.

5. Lenkung eines Portalstaplers nach den Ansprüchen 1 bis 4, **dadurch gekennzeichnet, daß** der Stangenkopf (3') aus einem zähen Werkstoff, zum Beispiel Baustahl, besteht.

6. Lenkung eines Portalstaplers nach den Ansprüchen 1 bis 5, **dadurch gekennzeichnet, daß** der Stangenkopf (3') mittels Kontermuttern (12) und in seiner Länge verstellbar am Lenkstangenrohr (2) angeordnet ist.

## Claims

1. Steering unit of a straddle carrier, consisting of a steering rod (1), a tube (2) with rod heads (3, 3') for mounting the bearing (4), which on the one hand engages with the steel structure of the wheel suspension (5) of the wheel (6) to be steered and on the other engages with the mechanical actuating member (7) of the steering unit, and comprising an offset (8) on at least one of the rod heads (3, 3'), **characterised by** an offset (8) on the rod head (3'), the cross-sectional area (10) of which is measured for a predetermined material such that under maximum possible loading a plastic deformation of the rod head occurs without breaking, wherein the false lever (9) of the rod head (3') resulting from the offset (8) is selected relative to the rod tube (2) so that with excessive axial forces in the steering rod the plastic deformation occurs on the rod head (3').

2. Steering unit of a straddle carrier according to claim 1, **characterised in that** the cross-sectional area (10) of the intended bending point is selected so that excessive loading on the cross section of the intended bending point, according to Hook's law, causes mathematically a degree of tension which in the extended external fibres corresponds to 1 or 2 times the tensile strength of the material of the rod head (3') and in the compressed external fibres corresponds to 1.5 to 2.5 times the tensile strength of the material of the rod head (3').

3. Steering unit of a straddle carrier according to claim 2, **characterised in that** the cross-sectional area (10) is configured to be rectangular.

4. Steering unit of a straddle carrier according to claim 3, **characterised in that** the ratio of cross-sectional height to cross-sectional width to false lever is about 2:1:1.

5. Steering unit of a straddle carrier according to claims 1 to 4, **characterised in that** the rod head (3') is made from a tough material, for example structural steel.

6. Steering unit of a straddle carrier according to claims 1 to 5, **characterised in that** the rod head (3') is arranged by means of lock nuts (12) to be adjustable in length on the steering rod tube (2).

## Revendications

1. Direction d'une empileuse de portails constituée par la barre de direction (1), d'un tube (2) comportant des têtes de barre (3, 3') pour la réception du roulement (4), qui, d'une part, est en prise sur le bâti en acier de la suspension (5) de la roue devant être dirigée (6) et d'autre part, sur l'actionneur mécanique (7) de la direction, et d'un coude (8) sur au moins l'une des têtes de barre (3, 3'), **caractérisée en ce qu'**un coude (8) sur la tête de barre (3') dont la surface de la section transversale (10), pour un matériau prédéterminé, est dimensionnée de telle sorte qu'une déformation plastique de la tête de barre se produit sans rupture pour une sollicitation prédéterminée maximale, l'écart d'implantation (9) de la tête de barre (3') résultant du coude (8) par rapport au tube de la barre (2) étant choisi de telle manière que la déformation plastique sur la tête de barre (3') se produise pour des forces axiales de grande dimension dans la barre de direction.

2. Direction d'une empileuse de portails selon la revendication 1 **caractérisée en ce que** la surface de la section transversale (10) de la position théorique du pliage est choisie de telle sorte qu'une sollicitation de grande dimension dans la section transversale de la position théorique de pliage provoque une tension calculée en admettant que la loi de Hooke s'applique, tension qui correspond, dans la fibre externe étirée, à 1 à 2 fois, et dans la fibre externe refoulée, à 1,5 à 2,5 fois, la résistance à la traction du matériau de la tête de la barre (3').

3. Direction d'une empileuse de portails selon la revendication 2 **caractérisée en ce que** la surface de la section transversale (10) est conçue de forme rectangulaire.

4. Direction d'une empileuse de portails selon la revendication 3 **caractérisée en ce que** le rapport entre la hauteur de la section transversale, la largeur de la section transversale et l'écart d'implantation se situe à environ 2 : 1 : 1.

5. Direction d'une empileuse de portails selon les revendications de 1 à 4 **caractérisée en ce que** la tête de barre (3') est constituée d'un matériau résistant, par exemple de l'acier de construction.

6. Direction d'une empileuse de portails selon les revendications de 1 à 5 **caractérisée en ce que** la tête de la barre (3') est disposée, pouvant être réglée en longueur, sur le tube de la barre de direction (2) au moyen de contre-écrous (12).
